# EUROPEAN PATENT APPLICATION

(11) **EP 3 396 737 A1**
(43) Date of publication of application: **31.10.2018**
(21) Application number: 17168365.9
(22) Date of filing: 27.04.2017
(51) Int. Cl.: H01M 2/26, H01M 2/30, H01M 2/34, H01M 10/04

(54) **BATTERY CELL**

(71) Applicant: Lithium Energy and Power GmbH & Co. KG, 70469 Stuttgart (DE)
(72) Inventor: Busche, Martin, 96052 Bamberg (DE)
(74) Representative: Bee, Joachim

(57) **Abstract**

The invention refers to a battery cell (2), comprising a negative terminal (15), a positive terminal (16), an electrode assembly (10) and a discharging device (70), whereas the electrode assembly (10) comprises an anode that is electrically connected to the negative terminal (15) and a cathode that is electrically connected to the positive terminal (16), and whereas the discharging device (70) comprises a first busbar (71), a second busbar (72) and an activation unit (75). The anode contains several anode tabs (25) extending from a front edge of the electrode assembly (10) and the cathode contains several cathode tabs (26) extending from the front edge of the electrode assembly (10), whereas at least one of the anode tabs (25) is directly fixed to first busbar (71) and at least one of the cathode tabs (26) is directly fixed to second busbar (72).

## Description

The invention relates to a battery cell that comprises a negative terminal, a positive terminal, an electrode assembly and a discharging device. The electrode assembly comprises an anode that is electrically connected to the negative terminal and a cathode that is electrically connected to the positive terminal. The discharging device comprises a first busbar, a second busbar and an activation unit.

### State of the Art

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel. A battery cell comprises a positive terminal and a negative terminal, whereas the battery cell can be charged and discharged via the terminals.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

An electrode assembly has a positive electrode called cathode and a negative electrode called anode. The anode and the cathode are separated from one another by means of a separator. The electrodes of the electrode assembly can be formed like foils and wound with interposition of the separator to form an electrode roll, also referred to as jelly-roll. Alternatively, the electrodes of the electrode assembly can be layered with interposition of the separator to form an electrode stack.

In case of error, i.e. a failure in operation of the battery, such as internal short circuit, crush or other damage a battery cell can be discharged to avoid critical situations. To this end, discharging devices are known. Such a discharging device, also called safety relay, is a bypass element that is connected to the terminals of the battery cell. In normal operation of the battery cell, the safety relay is in off-state and insulates the terminals of the battery cell electrically from each other. In case of error, the safety relay is activated and gets into on-state. Then the safety relay joins the terminals of the battery cell electrically. Hence, a discharging current is flowing through the safety relay and the battery cell is discharged.

Document DE 10 2012 005 979 B4 discloses a bypass element for bypassing a battery cell of an electric energy storage. The bypass element comprises two current collectors and a safety stack arranged in between. The safety stack comprises two solder layers that are arranged each facing one current collector, two insulation layers arranged between the solder layers and a reactive layer arranged between the insulation layers. When the reactive layer is activated, an exothermic reaction takes place and the insulation layers are disintegrated. Thus, the electric conductive solder layers are getting in contact with one another and hence, the current collectors are joined electrically.

Document DE 10 2011103 118 A1 discloses a device for automatic discharging a battery, comprising at least one discharging resistor. The battery comprises a supervision unit which is connected to a supervision element. In regular operation, the supervision unit and the supervision element send signals to one another. In absence of said signals, the battery is discharged by dint of the discharging resistor.

Document DE 10 2014 217 525 A1 discloses a device for increasing safety during use of a battery system. The battery system includes a discharging device for electrical discharging the battery system. The device for increasing safety is a device for transforming electrical energy into non-electrical energy and is connectable to the discharging device.

### Disclosure of the Invention

A battery cell is proposed which comprises a negative terminal, a positive terminal, an electrode assembly and a discharging device. The electrode assembly comprises an anode that is electrically connected to the negative terminal and a cathode that is electrically connected to the positive terminal. The discharging device comprises a first busbar, a second busbar and an activation unit. The activation unit is connected to the busbars and is arranged between the busbars. In case of a failure in operation of the battery, such as an internal short circuit, insulation failure, crush or other damage of the battery, the activation unit is activated and generates an electrical connection between the busbars and hence the battery cell is discharged.

According to the invention, the anode contains several anode tabs extending from a front edge of the electrode assembly and the cathode contains several cathode tabs extending from the front edge of the electrode assembly. At least one of the anode tabs is directly fixed to first busbar of the discharging device and at least one of the cathode tabs is directly fixed to second busbar of the discharging device.

Several anode tabs are arranged on top of each other like a stack, whereas one of the anode tabs is fixed to the first busbar of the discharging device and a subsequent anode tab is fixed to a previous anode tab. Respectively, several cathode tabs are arranged on top of each other like a stack, whereas one of the cathode tabs is fixed to the second busbar of the discharging device and a subsequent cathode tab is fixed to a previous cathode tab.

According to a preferred embodiment of the invention, the first bus bar and the second busbar are shaped prismatic, each of the busbars having an upper surface and a lower surface that are arranged opposite to one another. At least one of the anode tabs is directly fixed to the upper surface of the first busbar and at least one of the anode tabs is directly fixed to the lower surface of the first busbar. Also, at least one of the cathode tabs is directly fixed to the upper surface of the second busbar and at least one of the cathode tabs is directly fixed to the lower surface of the second busbar.

Hence, the first busbar of the discharging device is arranged between anode tabs, in particular between two stacks of anode tabs. Also, the second busbar of the discharging device is arranged between cathode tabs, in particular between two stacks of cathode tabs.

Preferably, at least one of the anode tabs is directly fixed to the first busbar of the discharging device by welding. Also preferably, at least one of the cathode tabs is directly fixed to the second busbar of the discharging device by welding.

According to a preferred development of the invention, the electrode assembly is arranged within a housing that comprises a first housing element forming the negative terminal and a second housing element forming the positive terminal.

According to an advantageous embodiment of the invention, the first housing element is directly fixed to at least one of the anode tabs and the second housing element is directly fixed to at least one of the cathode tabs. In particular, the first housing element is fixed to an anode tab which is arranged distant from the first busbar and the second housing element is fixed to a cathode tab which is arranged distant from the second busbar.

Preferably, the first bus bar and the second busbar are shaped prismatic, each of the busbars having an upper surface and a lower surface that are arranged opposite to one another. The first housing element is directly fixed to at least one of the anode tabs which is arranged on the upper surface of the first busbar and the first housing element is directly fixed to at least one of the anode tabs which is arranged on the lower surface of the first busbar. Also, the second housing element is directly fixed to at least one of the cathode tabs which is arranged on the upper surface of the second busbar and the second housing element is directly fixed to at least one of the cathode tabs which is arranged on the lower surface of the second busbar.

Preferably, the first housing element is directly fixed to at least one of the anode tabs by welding. Also preferably, the second housing element is directly fixed to at least one of the cathode tabs by welding.

According to a preferred embodiment of the invention, a retainer can be provided which has a first leg that is arranged between the electrode assembly and the housing elements. The retainer in particular serves for aligning the electrode assembly within the housing.

Advantageously, the retainer has a second leg that is arranged between the first housing element and the second housing element. The retainer is made of an electrically insulating material and serves for electrically insulation between the first housing element that forms the negative terminal and the second housing element that forms the positive terminal.

According to an advantageous development of the invention, a sealing compound is provided for sealing the housing. Thereto, the sealing compound is provided in regions between the first housing element and the second housing element as well as in regions between the housing elements and the retainer.

According to an advantageous embodiment of the invention, the discharging device is arranged inside the housing.

According to a possible embodiment of the invention, the first housing element and the second housing element are made of different materials. For example, the second housing element that forms the positive terminal is made of aluminium or other material that allows for electrical current flux and is electrochemically, mechanically thermally and electrically stable against all adjacent materials, and the first housing element that forms the negative terminal is made of nickel-plated steel which is for example known as HILUMIN ® or other material that allows for electrical current flux and is electrochemically, mechanically, thermally, and electrically stable against all adjacent materials.

According to another possible embodiment of the invention, the first housing element and the second housing element are made of a compound material containing a metallic layer which is plated with an insulating layer. In particular, the metallic layer is made of aluminium and the insulating layer is made of polyethylene.

To fix and close the housing, the insulating layer of the first housing element and the insulating layer of the second housing element are fixed to one another by heat sealing, whereas the insulating layers are preferably made of polyethylene.

The compound material may have a coating made of polyester. The metallic layer is arranged between the insulating layer made of polyethylene and the coating made of polyester.

A battery cell according to the invention is useable advantageously in particular in an electric vehicle (EV), in a hybrid electric vehicle (HEV), in a plug-in hybrid vehicle (PH EV) or in a stationary application. But also other applications are feasible.

### Advantages of the Invention

A battery cell according to the invention has a very low external ohmic resistance when the discharging device is in on-state. The external ohmic resistance in said case is the direct sum of the ohmic resistance of the activation unit in on-state, the ohmic resistance of the first busbar and the second busbar and the ohmic resistance of the welding spots between the anode tabs respectively the cathode tabs and the busbars. The geometry, positioning and joints of all parts carrying a current flux are leading to a minimized external ohmic resistance. The energy dissipated inside the electrode assembly for instance in case of an internal short circuit or other failure in operation leading to a not intended internal discharge of the cell is reduced by the fraction of the energy dissipated over the parallel path given by the discharging device. Hence, the battery cell can be discharged with a relatively high discharging current and internal heat in the electrode assembly is decreased for instance in case of internal shortcut. Hence, thermal runaway and explosion of the battery can be avoided and the hazard level is reduced. Furthermore, the integration of the discharging device does not significantly increase the volume of the battery cell. Hence, the energy density of the battery cell is still sufficient. Furthermore, when the housing elements are directly welded to the anode tabs and/or the cathode tabs, the ohmic resistance of the battery terminals is very low. Thus, it enables battery modules with very low resistance allowing for a high round trip efficiency during cycling as well as a minimum joule heating of the current path through the module.

### Brief Description of the Drawings

For a better understanding of the aforementioned embodiments of the invention as well as additional embodiments thereof, reference should be made to the description of embodiments below, in conjunction with the appended drawings showing:
- Figure 1: a perspective view of an electrode assembly with a discharging device,
- Figure 2: a perspective, semi-transparent view of housing elements,
- Figure 3: a perspective view of a retainer,
- Figure 4: a perspective, semi-transparent view of a battery cell,
- Figure 5 - Figure 9: steps during production of a battery cell,
- Figure 10: a sectional view of a first embodiment of a battery module,
- Figure 11: a front view of the battery module of figure 10,
- Figure 12: a front view of a second embodiment of a battery module,
- Figure 13: a front view of a third embodiment of a battery module and
- Figure 14: a perspective view of a battery cell according to an alternative embodiment.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

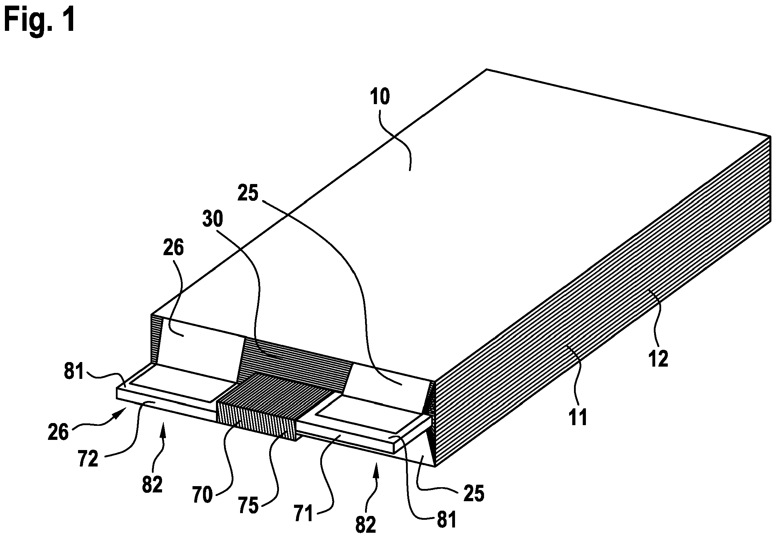

Figure 1 shows a perspective view of an electrode assembly 10 with a discharging device 70. The electrode assembly 10 contains an anode 11, a cathode 12 and a separator that is arranged between the anode 11 and the cathode 12. Presently, the electrode assembly 10 is shaped as an electrode stack. That means the anode 11 and the cathode 12 of the electrode assembly 10 consist of several flat sheets that are stacked alternately to form a pile or a stack. The separator which is not shown here also consists of several flat sheets that are stacked between the sheets of the anode 11 and the sheets of the cathode 12.

The anode 11 contains an anode composite material and an anode current collector. The anode composite material and the anode current collector are attached to one another. The anode current collector is electrically conductive and is made of a metal, in particular of copper. The cathode 12 contains a cathode composite material and a cathode current collector. The cathode composite material and the cathode current collector are attached to one another. The cathode current collector is electrically conductive and is made of a metal, in particular of aluminium. The anode 11 contains several anode tabs 25 that protrude from the anode current collector and extend from a front edge 30 of the electrode assembly 10. The cathode 12 contains several cathode tabs 26 that protrude from the cathode current collector and extend from the front edge 30 of the electrode assembly 10.

The anode tabs 25 are electrically connected, in particular welded, to a first busbar 71 of a discharging device 70. The cathode tabs 26 are electrically connected, in particular welded, to a second busbar 72 of the discharging device 70. The discharging device 70 further comprises an activation unit 75 that is arranged between the busbars 71, 72. The activation unit 75 is arranged nearby the front edge 30 of the electrode assembly 10. The first busbar 71 and the second busbar 72 are shaped prismatic. Each of the busbars 71, 72 has an upper surface 81 and a lower surface 82 that are arranged opposite to one another.

One of the anode tabs 25 is welded to the upper surface 81 of the first busbar 71 and one of the anode tabs 25 is welded to the lower surface 82 of the first busbar 71. Thereto, several anode tabs 25 are arranged on top of each other like stacks, whereas one of the anode tabs 25 is welded to the first busbar 71, as described before, and a subsequent anode tab 25 is welded to a previous anode tab 25. One of the cathode tabs 26 is welded to the upper surface 81 of the second busbar 72 and one of the cathode tabs 26 is welded to the lower surface 82 of the second busbar 72. Thereto, several cathode tabs 26 are arranged on top of each other like stacks, whereas one of the cathode tabs 26 is fixed to the second busbar 72, as described before, and a subsequent cathode tab 26 is fixed to a previous cathode tab 26.

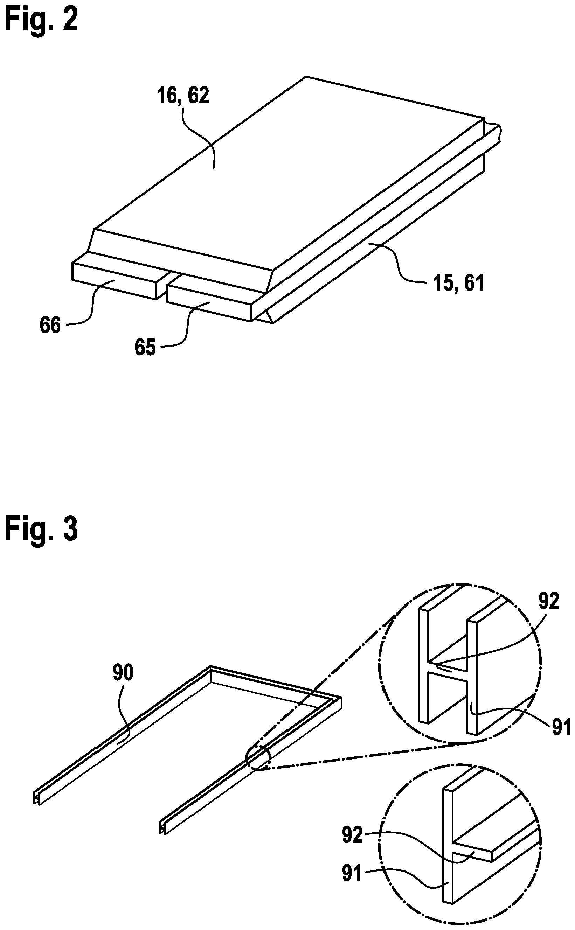

Figure 2 shows a perspective, semi-transparent view of a first housing element 61 and a second housing element 62. The first housing element 61 forms a negative terminal 15 of a battery cell 2 and the second housing element 62 forms a positive terminal 16 of the battery cell 2. A first protrusion 65 protrudes from the first housing element 61 and a second protrusion 66 protrudes from the second housing element 62. The housing elements 61, 62 are shaped identically.

Figure 3 shows a perspective view of a retainer 90. The retainer 90 is made of an electrically insulating material and may have different cross sections. Two possible cross sections of the retainer 90 are also shown in figure 3. For example, the cross section of the retainer 90 is H-shaped or T-shaped. In both cases, the retainer 90 has a first leg 91 that is arranged between the electrode assembly 10 and the housing elements 61, 62. The retainer 90 also has a second leg 92 that is arranged between the first housing element 61 and the second housing element 62. Hence, the retainer 90 serves for aligning the electrode assembly 10 relatively to the housing elements 61, 62 and for electrically insulation between the first housing element 61 and the second housing element 62.

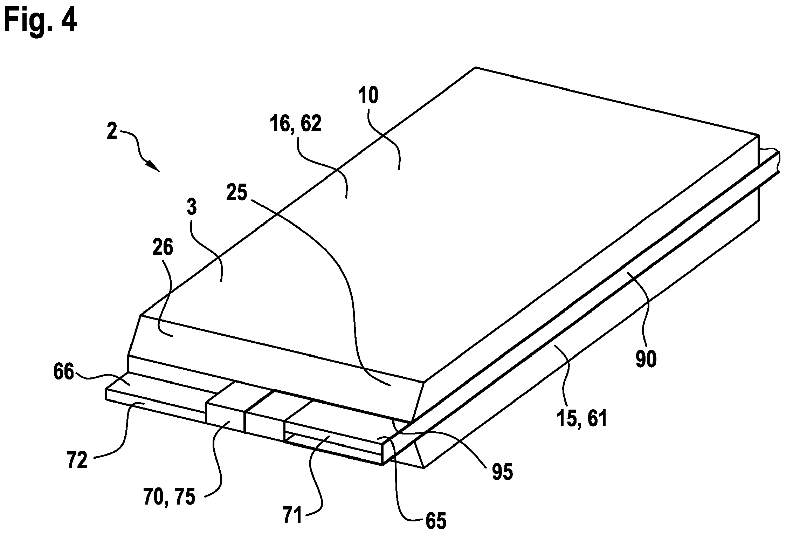

Figure 4 shows a perspective, semi-transparent view of a battery cell 2. The battery cell 2 comprises the electrode assembly 10 and the discharging device 70 shown in figure 1, the housing elements 61, 62 shown in figure 2 and the retainer 90 shown in figure 3. The electrode assembly 10 and the discharging device 70 are arranged within a housing 3 which is formed by the housing elements 61, 62 and the retainer 90. A sealing compound 95 for sealing the housing 3 is provided in regions between the first housing element 61 and the second housing element 62 as well as in regions between the housing elements 61, 62 and the retainer 90.

The first protrusion 65 of the first housing element 61 is welded to the anode tabs 25 which are arranged on the upper surface 81 of the first busbar 71 and to the anode tabs 25 which are arranged on the lower surface 82 of the first busbar 71. The second protrusion 66 of the second housing element 62 is welded to the cathode tabs 26 which are arranged on the upper surface 81 of the second busbar 72 and to the cathode tabs 26 which are arranged on the lower surface 82 of the second busbar 72. Hence, the first housing element 61 that forms the negative terminal 15 is connected to the anode 11 and the second housing element 62 that forms the positive terminal 16 is connected to the cathode 12.

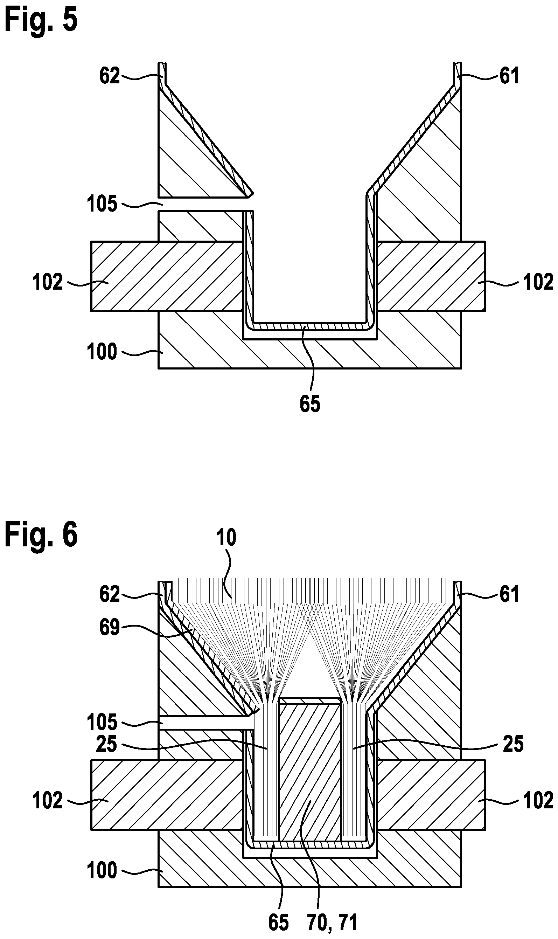

Figure 5 to Figure 9 show steps during production of a battery cell 2. In a first step shown in figure 5, the first housing element 61 and the second housing element 62 are inserted into a fixture 100 such that the protrusions 65, 66 are completely arranged within the fixture 100. The fixture 100 comprises two sonotrodes 102 and a filling hole 105 that are visible in this view. The fixture 100 comprises two further sonotrodes 102 and a further filling hole 105 that are hidden in this view.

In a second step shown in figure 6, the electrode assembly 10 and the discharging device 70 are inserted into the housing elements 61, 62. An insulation element 69 is placed between the anode tabs 25 and the second housing element 62. Another insulation element 69 that is hidden in this view is placed between the cathode tabs 26 and the first housing element 61. Furthermore, the retainer 90 which is not shown here is placed around the electrode assembly 10 and between the housing elements 61, 62.

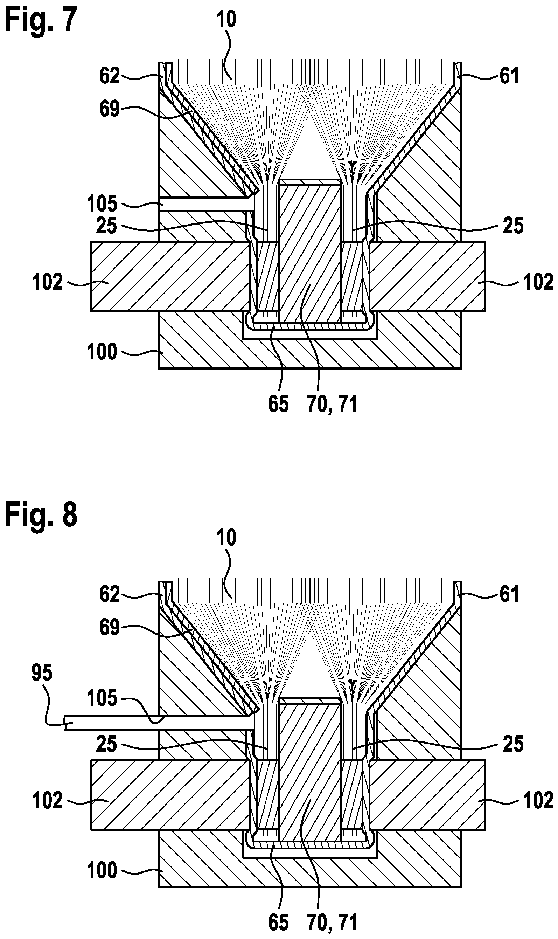

In a third step shown in figure 7, the sonotrodes 102 are pressed against each other. Thus, the first protrusion 65 of the first housing element 61 is pressed against the anode tabs 25 which are pressed against the first busbar 71 of the discharging device 70. Also, the second protrusion 66 of the second housing element 62 is pressed against the cathode tabs 26 which are pressed against the second busbar 72 of the discharging device 70. Then, the first housing element 61, the anode tabs 25 and the first busbar 71 are welded in one stage. Also, the second housing element 62, the cathode tabs 26 and the second busbar 72 are welded in one stage.

Alternatively, the anode tabs 25 are welded to the first busbar 71 and the cathode tabs 26 are welded to the second busbar 72 in one stage. Then, the first housing element 61 is welded the anode tabs 25 and the second housing element 62 is welded to the cathode tabs 26 in a later stage.

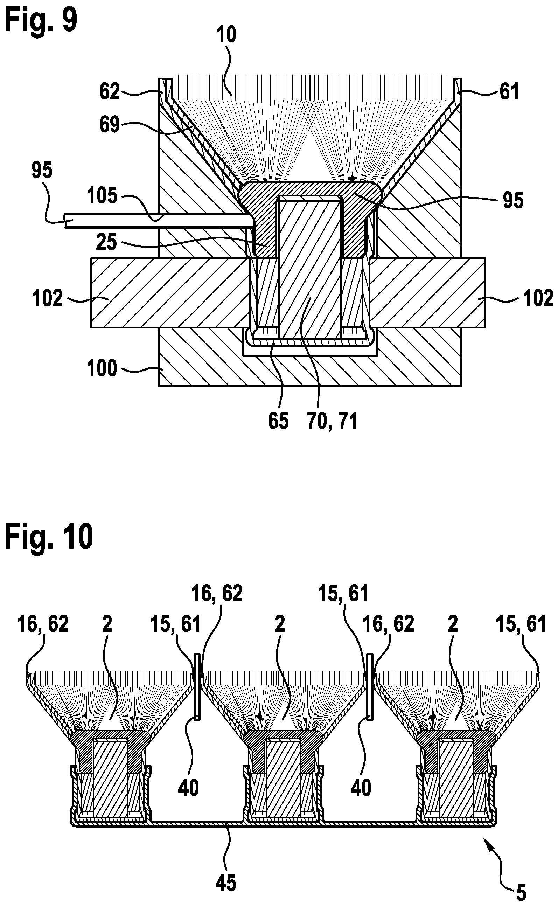

In a fourth step shown in figure 8, the sealing compound 95 is pressed into the fixture 100 through the filling hole 105. In a fifth step shown in figure 9, the sealing compound 95 is distributed into regions between the housing elements 61, 62 and the retainer 90 as well as in regions between the first housing element 61 and the second housing element 62. Furthermore, the sealing compound 95 is distributed in regions around the first busbar 71, the second busbar 72, the anode tabs 25 and the cathode tabs 26.

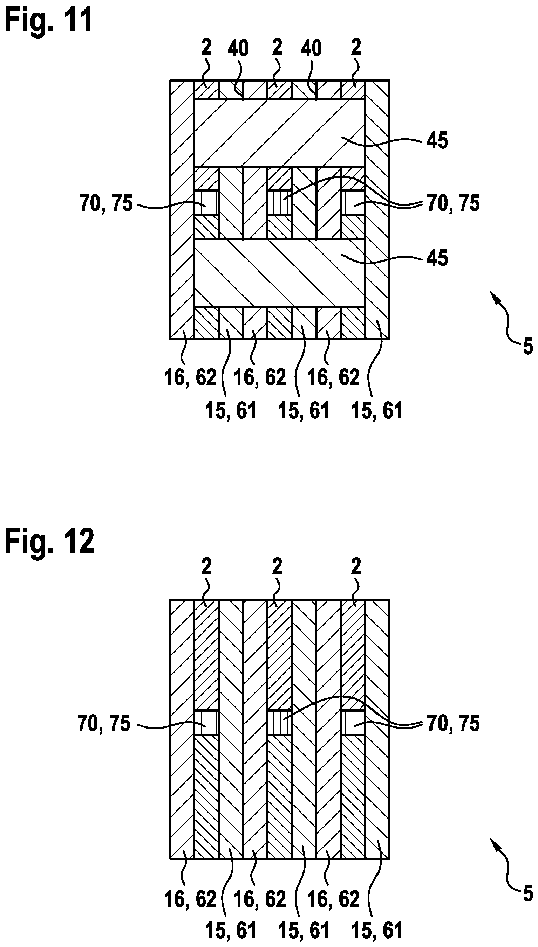

Figure 10 shows a sectional view of a first embodiment of a battery module 5 that comprises three battery cells 2. The three battery cells 2 are electrically connected in parallel. Thereto, a connector 45 is provided that connects the negative terminals 15 of the battery cells 2. Another connector 45 is provided that connects the positive terminals 16 of the battery cells 2. Insulation sheets 40 are arranged between the battery cells 2 for insulating the negative terminals 15 and the positive terminals 16 of adjacent battery cells 2. Figure 11 shows a front view of the battery module 5 of figure 10.

Figure 12 shows a front view of a second embodiment of a battery module 5 that comprises three battery cells 2. The three battery cells 2 are electrically connected in series. Thereto, the battery cells 2 are arranged one besides the other such that the negative terminals 15 and the positive terminals 16 of adjacent battery cells 2 are in contact.

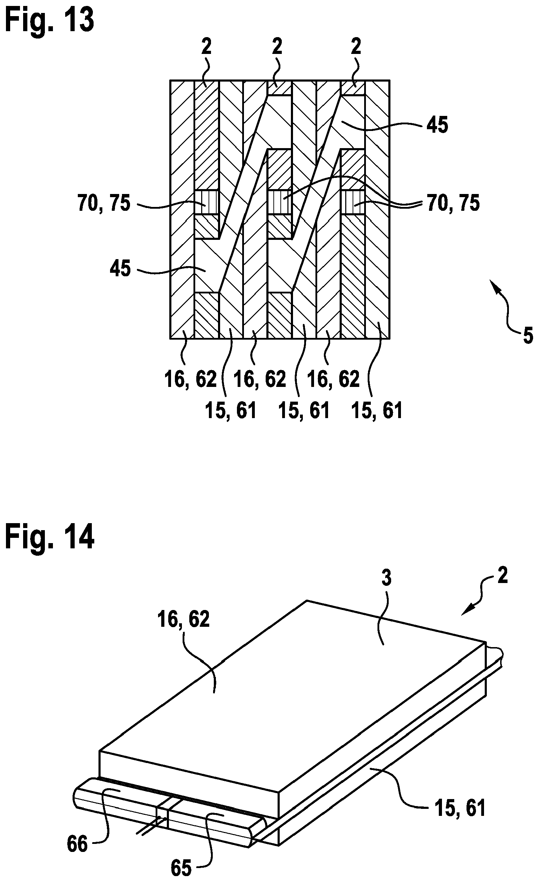

Figure 13 shows a front view of a third embodiment of a battery module 5 that comprises three battery cells 2. The three battery cells 2 are electrically connected in series. Thereto, the battery cells 2 are arranged one besides the other such that the negative terminals 15 and the positive terminals 16 of adjacent battery cells 2 are in contact. Furthermore, connectors 45 are provided that additionally connect the negative terminals 15 to the positive terminals 16 of adjacent battery cells 2.

Figure 14 shows a perspective view of a battery cell 2 according to an alternative embodiment. The first housing element 61 and the second housing element 62 are made of a compound material containing a metallic layer which is plated with an insulating layer. The metallic layer is made of aluminium and the insulating layer is made of polyethylene. The insulating layer of the first housing element 61 and the insulating layer of the second housing element 62 are fixed to one another by heat sealing. Hence, a retainer 90 is not necessary.

The housing elements 61, 62 are arranged such that the insulating layers point towards the electrode assembly 10 inside the housing 3. The compound materials also have a coating made of polyester. The metallic layer is arranged between the insulating layer made of polyethylene and the coating made of polyester. The housing element 61, 62 are arranged such that the coatings point outwards.

Areas around the first protrusion 65 of the first housing element 61 and around the second protrusion 66 of the second housing element 62 are at least partially decoated and hence are free of the insulating layer as well as of the coating. Thus, in said areas the metallic layer is accessible for welding the protrusions 65, 66 to the anode tabs 25, respectively the cathode tabs 26 and for electrical contact to the terminals 15, 16 of the battery cell 2.

The decoating is done in a way that no free aluminium surface is accessible by the electrolyte at least for the first housing element 61 that is on anodic potential. Furthermore, an alternative embodiment may comprise two different types of housing elements 61, 62 containing different metals: I.e. the first housing element 61 on anode potential is produced of a nickel coated steel or other material that is electrochemically stable against the electrolyte while being on any potential in the operational range of the battery. In that case, the decoating of the material may allow for electrolyte contact.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery cell (2), comprising
a negative terminal (15),
a positive terminal (16),
an electrode assembly (10) and
a discharging device (70), whereas
the electrode assembly (10) comprises
an anode (11) that is electrically connected to the negative terminal (15) and a cathode (12) that is electrically connected to the positive terminal (16), and whereas
the discharging device (70) comprises a first busbar (71), a second busbar (72) and an activation unit (75),
**characterized in that**
the anode (11) contains several anode tabs (25) extending from a front edge (30) of the electrode assembly (10) and
the cathode (12) contains several cathode tabs (26) extending from the front edge (30) of the electrode assembly (10), whereas
at least one of the anode tabs (25) is directly fixed to first busbar (71) and at least one of the cathode tabs (26) is directly fixed to second busbar (72).

2. Battery cell (2) according to claim 1, **characterized in that**
the first busbar (71) and the second busbar (72) are shaped prismatic, having an upper surface (81) and a lower surface (82) arranged opposite to one another, whereas
at least one of the anode tabs (25) is directly fixed to the upper surface (81) of the first busbar (71) and
at least one of the anode tabs (25) is directly fixed to the lower surface (82) of the first busbar (71) and
at least one of the cathode tabs (26) is directly fixed to the upper surface (81) of the second busbar (72) and
at least one of the cathode tabs (26) is directly fixed to the lower surface (82) of the second busbar (72).

3. Battery cell (2) according to one of the preceding claims,
**characterized in that**
at least one of the anode tabs (25) is directly fixed to the first busbar (71) by welding and
at least one of the cathode tabs (26) is directly fixed to the second busbar (72) by welding.

4. Battery cell (2) according to one of the preceding claims,
**characterized in that**
the electrode assembly (10) is arranged within a housing (3) that comprises a first housing element (61) forming the negative terminal (15) and a second housing element (62) forming the positive terminal (16).

5. Battery cell (2) according to claim 4, **characterized in that**
the first housing element (61) is directly fixed to at least one of the anode tabs (25) and that
the second housing element (62) is directly fixed to at least one of the cathode tabs (26).

6. Battery cell (2) according to one of claims 4 to 5, **characterized in that**
the first busbar (71) and the second busbar (72) are shaped prismatic, having an upper surface (81) and a lower surface (82) arranged opposite to one another, whereas
the first housing element (61) is directly fixed to at least one of the anode tabs (25) which is arranged on the upper surface (81) of the first busbar (71) and
the first housing element (61) is directly fixed to at least one of the anode tabs (25) which is arranged on the lower surface (82) of the first busbar (71) and
the second housing element (62) is directly fixed to at least one of the cathode tabs (26) which is arranged on the upper surface (81) of the second busbar (72) and
the second housing element (62) is directly fixed to at least one of the cathode tabs (26) which is arranged on the lower surface (82) of the second busbar (72).

7. Battery cell (2) according to one of claims 4 to 6, **characterized in that**
the first housing element (61) is directly fixed to at least one of the anode tabs (25) by welding and that
the second housing element (62) is directly fixed to at least one of the cathode tabs (26) by welding.

8. Battery cell (2) according to one of claims 4 to 7, **characterized in that**
a retainer (90) is provided which has a first leg (91) that is arranged between the electrode assembly (10) and the housing elements (61, 62).

9. Battery cell (2) according to claim 8, **characterized in that**
the retainer (90) has a second leg (92) that is arranged between the first housing element (61) and the second housing element (62).

10. Battery cell (2) according to one of claims 4 to 9, **characterized in that**
a sealing compound (95) is provided for sealing the housing (3).

11. Battery cell (2) according to one of claims 4 to 10, **characterized in that**
the discharging device (70) is arranged inside the housing (3).

12. Battery cell (2) according to one of claims 4 to 11, **characterized in that**
the first housing element (61) and the second housing element (62) are made of different materials.

13. Battery cell (2) according to one of claims 4 to 12, **characterized in that**
the first housing element (61) and the second housing element (62) are made of a compound material containing a metallic layer which is plated with an insulating layer.

14. Battery cell (2) according to claim 13, **characterized in that**
the insulating layer of the first housing element (61) and
the insulating layer of the second housing element (62) are fixed to one another by heat sealing.

15. Usage of a battery cell (2) according to one of the preceding claims in an electric vehicle (EV), in a hybrid electric vehicle (HEV), in a plug-in hybrid vehicle (PHEV) or in a stationary application.
